# EUROPEAN PATENT APPLICATION

(11) **EP 1 443 726 A2**
(43) Date of publication of application: **04.08.2004**
(21) Application number: 03258237.1
(22) Date of filing: 30.12.2003
(51) Int. Cl.: H04L 29/06

(54) **Information management method, information managing system, central apparatus, terminal apparatus, and computer program product**

(30) Priority: 30.01.2003 JP 2003022744
(71) Applicant: FUJITSU LIMITED, Kawasaki-shi, Kanagawa 211-8588 (JP)
(72) Inventor: Kitano, Hiroshi c/o Fujitsu Limited, Kawasaki-shi Kanagawa 211-8588 (JP)
(74) Representative: Stebbing, Timothy Charles

(57) **Abstract**

A terminal apparatus (20), which receives managing object information to be managed from a central apparatus (10), detects communication status with the central apparatus (10), and a CPU (21) judges whether or not to execute processing on the received managing object information on the basis of the detected control status. Specifically, only when the communication is established between the central apparatus (10) and the terminal apparatus (20), processing on the information by the terminal apparatus (20) is permitted within a predetermined range, and the information is automatically deleted when communication with the central apparatus (10) is disconnected, and therefore the central apparatus (10) can manage the information even after the information is transmitted to the terminal apparatus (20). Hence leakage of information can be prevented.

## Description

### BACKGROUND OF THE INVENTION

### 1. Field of the Invention

The present invention relates to an information management system for preventing leakage of information to the outside in a system designed to transmit the information recorded in a data server (central apparatus) to a terminal apparatus, and perform various operations in the terminal apparatus. More specifically, the present invention relates to an information management method for managing the information transmitted and received between a central apparatus which records the managing object information (managing object information) and a terminal apparatus which can communicate with the central apparatus, an information managing system applying this method, a central apparatus and a terminal apparatus for composing this system, and a computer program product for realizing these two apparatuses by a general purpose computer system, and more particularly to information management method, information managing system, central apparatus, terminal apparatus, and computer program product capable of preventing leakage of managing object information to outside.

### 2. Description of the Related Art

An information management system, in which information is transmitted from a central apparatus as a data server recording a huge quantity of information to a terminal apparatus such as personal computer, and the terminal apparatus receives the information from the central apparatus, and the information is processed according to the operation accepted in the terminal apparatus is widely employed.

In such an information management system, to prevent illegal external leakage of information, the central apparatus authenticates the terminal apparatus itself or the operator of the terminal apparatus, and the information is transmitted to the terminal apparatus only when the authentication is successful.

For example, Japanese Patent Application Laid-open No. 2002-41359 discloses a system reinforced in safety, in which a server (central apparatus) records the process log (history) of clients (terminal apparatuses), and permits processing of the information by the client according to the recorded log.

In the conventional information management system, however, the information transmitted from the central apparatus to the terminal apparatus and recorded in the terminal apparatus is not always controlled by the central apparatus, and may be sometimes copied illegally and leak to the outside. In such a case, if the authentication information used in authentication such as ID or password is acquired by a third person not authorized to process the information, the third person can spoof as an authorized operator and obtain the information illegally by operating the terminal apparatus.

What is worse, the terminal apparatus itself may be stolen, the information can be copied into an external storage medium, the external storage medium may be brought outside, and the information may leak to the outside.

Such problem is not eliminated in the invention disclosed in Japanese Patent Application Laid-open No. 2002-41359.

### SUMMARY OF THE INVENTION

The present invention is devised in the light of the background described above, and it is hence an object thereof to provide an information managing technique for detecting communication status with the central apparatus by the terminal apparatus receiving the managing object information to be managed, and judging on the basis of the detected communication status whether or not to execute processing on the received information. Specifically, only when the communication is established between the central apparatus and terminal apparatus, processing on the information by the terminal apparatus is permitted within a predetermined range, and the information is deleted automatically when communication with the central apparatus is disconnected, and therefore the central apparatus can manage the information even after the information is transmitted to the terminal apparatus to reinforce management of the information, while leakage of information to the outside is prevented, and such an information management system is provided, together with the information managing system applying this method, the central apparatus and terminal apparatus for composing such system, and the computer program product for realizing these apparatuses by a general purpose computer system.

A first aspect of the present invention relates to an information management method for processing managing object information to be managed by using a central apparatus recording managing object information and a terminal apparatus communicating with the central apparatus, which is characterized by comprising steps of: transmitting the managing object information recorded in the central apparatus from the central apparatus to the terminal apparatus; detecting communication status with the central apparatus by the terminal apparatus; and judging by the terminal apparatus, on the basis of the detected communication status, whether or not to execute processing on the managing object information received by the terminal apparatus.

In the information management method of the first aspect of the present invention, the terminal apparatus receiving the managing object information to be managed detects communication status with the central apparatus, and judges, on the basis of the detected communication status, whether or not to execute processing on the received managing object information. Specifically, only when the communication is established between the central apparatus and terminal apparatus, processing on the managing object information by the terminal apparatus is permitted within a predetermined range, and the managing object information is deleted automatically when communication with the central apparatus is disconnected. As a result, the central apparatus can manage the managing object information even after the information is transmitted to the terminal apparatus. Hence, management of the managing object information is reinforced, and leakage of information to outside is prevented.

A second aspect of the present invention relates to an information managing system including: a central apparatus recording managing object information to be managed; and a terminal apparatus communicating with the central apparatus, which is characterized in that the central apparatus comprises means for transmitting the recorded managing object information to the terminal apparatus; and the terminal apparatus comprises: means for detecting communication status with the central apparatus; and means for judging whether or not to execute processing on the received managing object information on the basis of the detected communication status.

In the information managing system of the second aspect of the present invention, the terminal apparatus receiving the managing object information to be managed detects communication status with the central apparatus, and judges, on the basis of the detected communication status, whether or not to execute processing on the received managing object information. Specifically, only when the communication is established with the central apparatus, processing on the managing object information by the terminal apparatus is permitted within a predetermined range, and the managing object information is deleted automatically when communication with the central apparatus is disconnected. As a result, the central apparatus can manage the managing object information even after the information is transmitted to the terminal apparatus. Hence, management of the managing object information is reinforced, and leakage of information to outside is prevented.

A third aspect of the present invention relates to an information managing system including: a central apparatus recording managing object information to be managed; and a terminal apparatus communicating with the central apparatus, which is characterized in that the central apparatus comprises: recording means for recording the managing object information; and means for transmitting the recorded managing object information recorded in the recording means to the terminal apparatus; and the terminal apparatus comprises: recording means for recording the received managing object information; means for accepting the operation for the managing object information having been recorded in the recording means; means for detecting communication status with the central apparatus; and means for processing the managing object information on the basis of the accepted operation only when establishment of communication with the central apparatus is detected.

In the information managing system of the third aspect of the present invention, the terminal apparatus receiving the managing object information to be managed detects the communication status with the central apparatus, and only when the communication is established with the central apparatus, processing on the managing object information by the terminal apparatus is permitted. As a result, the central apparatus can manage the processing on the managing object information by the terminal apparatus even after the managing object information is transmitted to the terminal apparatus, and hence management of the managing object information is reinforced.

A fourth aspect of the present invention relates to an information managing system, which is characterized in that, in the third aspect, the terminal apparatus further comprises means for transmitting result information showing processing result of managing object information to the central apparatus; and the central apparatus records the received result information in the recording means.

In the information managing system of the fourth aspect of the present invention, the result information showing the processing result of the managing object information in the terminal apparatus is transmitted to the central apparatus, and the central apparatus receives and records this result information, and therefore the central apparatus can manage the processing on the managing object information by the terminal apparatus, and management of the managing object information is reinforced.

A fifth aspect of the present invention relates to an information managing system, which is characterized in that, in the third or fourth aspect, the terminal apparatus further comprises: means for transmitting updated managing object information to the central apparatus when the processing on the managing object information is a process for updating it; and means for deleting the managing object information; and the central apparatus further comprises means for updating managing object information corresponding to the received updated managing object information among the managing object information recorded in the recording means.

In the information managing system of the fifth aspect of the present invention, when processing on the managing object information is updating, after the updated managing object information is transmitted from the terminal apparatus to the central apparatus, the managing object information recorded in the terminal apparatus is deleted, and management of the managing object information is further reinforced.

A sixth aspect of the present invention relates to an information managing system, which is characterized in that, in any one of the third to fifth aspects, the terminal apparatus further comprises means for judging whether or not to execute processing on the managing object information on the basis of prerecorded setting or setting transmitted from the central apparatus.

In the information managing system of the sixth aspect of the present invention, by judging whether or not to execute processing on the managing object information in the terminal apparatus on the basis of the setting preliminarily recorded in the terminal apparatus itself or on the basis of the setting transmitted from the central apparatus, the operation on the managing object information in the terminal apparatus can be limited, and illegal copying or other operation can be prevented, and leakage of managing object information to outside can be prevented.

A seventh aspect of the present invention relates to an information managing system comprising a central apparatus recording managing object information to be managed and a terminal apparatus communicating with the central apparatus, which is characterized in that the central apparatus comprises means for transmitting the recorded managing object information to the terminal apparatus; and the terminal apparatus comprises: recording means for recording the received managing object information; means for detecting the communication status with the central apparatus; and means for deleting the recorded managing object information having been recorded in the recording means when establishment of communication with the central apparatus is not detected.

In the information managing system of the seventh aspect of the present invention, the terminal apparatus receiving the managing object information detects communication status with the central apparatus, and only when the communication with the central apparatus is judged to be disconnected, the terminal apparatus automatically deletes the managing object information. As a result, the central apparatus can manage the managing object information even after the managing object information is transmitted to the terminal apparatus, and hence management of the managing object information is reinforced, and leakage of information to outside is prevented.

An eighth aspect of the present invention relates to an information managing system, which is characterized in that, in any one of the third to seventh aspects, the central apparatus further comprises: means for detecting the communication status with the terminal apparatus; and means for executing predetermined abnormal processing when establishment of communication with the terminal apparatus is not detected.

In the information managing system of the eighth aspect of the present invention, the central apparatus transmitting the managing object information detects communication status with the terminal apparatus, and only when the communication with the terminal apparatus is judged to be disconnected, abnormal processing such as abnormal notice is executed. As a result, the central apparatus can inform the responsible manager of the difficult status of management of the managing object information, and hence management of the managing object information is reinforced, and leakage of information to outside is prevented.

A ninth aspect of the present invention relates to an information managing system, which is characterized by further comprising, in any one of the third to eighth aspects, a managing apparatus for communicating with the central apparatus and managing a facility in which the central apparatus and/or the terminal apparatus is installed; wherein the means of the central apparatus for executing predetermined abnormal processing transmits notice information for informing abnormal to the managing apparatus; and the managing means comprises means for making the facility to execute predetermined operation in the facility when receiving the notice information.

In the information managing system of the ninth aspect of the present invention, the central apparatus transmits notice information noticing abnormal to a managing apparatus as predetermined abnormal processing, and the managing apparatus, when receiving the notice information, executes predetermined operations on facilities such as closure or locking of entrance and exit. As a result, if a third person illegally acquires managing object information, escape of the third person can be prevented, and hence management of the managing object information is reinforced, and leakage of information to outside is prevented.

A tenth aspect of the present invention relates to an information managing system, which is characterized in that, in any one of the second to ninth aspects, the central apparatus further comprises means for converting original information as the origin of the managing object information into the managing object information; and the terminal apparatus further comprises means for converting the managing object information into original information.

In the information managing system of the tenth aspect of the present invention, original information is converted into managing object information which can be reconverted by the terminal apparatus, and is managed. Therefore, in case a third person acquires the managing object information, it can be reconverted into the original information only in the terminal apparatus connected to the central apparatus, and hence management of the original information as the source of the managing object information is reinforced, and leakage of information to outside is prevented.

An eleventh aspect of the present invention relates to a central apparatus, having means for communicating with a terminal apparatus, for recording managing object information to be managed, which is characterized by comprising: means for converting the original information as the origin of managing object information into the managing object information; means for transmitting the managing object information to the terminal apparatus; means for detecting the communication status with the terminal apparatus; and means for executing predetermined abnormal processing when establishment of communication with the terminal apparatus is not detected.

In the central apparatus of the eleventh aspect of the present invention, original information is converted into managing object information which can be reconverted by the terminal apparatus, and is managed. Therefore, in case a third person acquires the managing object information, it can be reconverted into the original information only in the terminal apparatus connected to the central apparatus, and hence management of the original information as the source of the managing object information is reinforced, and leakage of information to outside is prevented.

Moreover, the central apparatus detects communication status with the terminal apparatus, and executes abnormal processing such as abnormal notice when it is judged that communication with the terminal apparatus is disconnected. Therefore, the central apparatus can inform the responsible manager of the difficult status of management of managing object information, and management of the managing object information is reinforced, and leakage of information to outside is prevented.

A twelfth aspect of the present invention relates to a terminal apparatus, having means for communicating with a central apparatus which records managing object information to be managed, which is characterized by comprising: means for receiving the managing object information from the central apparatus; recording means for recording the received managing object information; means for detecting the communication status with the central apparatus; and means for judging whether or not to execute processing on the recorded managing object information having been recorded in the recording means on the basis of the detected communication status.

In the terminal apparatus of the twelfth aspect of the present invention, detecting communication status with the central apparatus, it is judged whether or not to execute processing on the received managing object information on the basis of the detected communication status, and when it is judged that communication with the central apparatus, the terminal apparatus automatically deletes the managing object information. Therefore, even after the managing object information is transmitted to the terminal apparatus, the central apparatus can manage the managing object information, and hence management of the original information is reinforced, and leakage of information to outside is prevented.

A thirteenth aspect of the present invention relates to a computer program product for use with an information managing system, which is characterized by comprising: a computer usable storage medium having a computer readable program code embodied therein for causing a computer communicating with other apparatus to process managing object information to be managed, the computer readable code comprising steps of: causing a computer to convert the original information as origin of managing object information into managing object information; causing a computer to transmit the managing object information to other apparatus; causing a computer to detect communication status with the apparatus of the communication destination of the managing object information; and causing a computer to execute a predetermined abnormal processing when establishment of communication with the apparatus of the communication destination of the managing object information is not detected.

In the computer program product of the thirteenth aspect of the present invention, when it is installed in a computer system for communicating with other apparatus such as terminal apparatus, a general computer system can be operated as a central apparatus of the present invention.

A fourteenth aspect of the present invention relates to a computer program product for use with an information managing system, which is characterized by comprising: a computer usable storage medium having a computer readable program code embodied therein for causing a computer communicating with other apparatus to process managing object information to be managed, the computer readable code comprising steps of: causing a computer to record the received managing object information when receiving it from other apparatus; causing a computer to detect communication status with the apparatus of the communication source of the managing object information; and causing a computer to judge whether or not to execute processing on the recorded managing object information on the basis of the detected communication status.

In the computer program product of the fourteenth aspect of the present invention, when it is installed in a computer system for communicating with other apparatus such as central apparatus, a general computer system can be operated as a terminal apparatus of the present invention.

The above and further objects and features of the present invention will more fully be apparent from the following detailed description with accompanying drawings.

### BRIEF DESCRIPTION OF THE SEVERAL VIEWS OF THE DRAWING

FIG. 1 is an explanatory diagram conceptually showing an information managing system of the present invention;
FIG. 2A is a block diagram showing a configuration of each apparatus used in the information managing system of the present invention and FIG. 2B is a schematic diagram showing contents of computer program of the present invention;
FIG. 3A, FIG. 3B, and FIG. 3C are explanatory diagrams conceptually showing tables showing setting of processing on managing object information in the information managing system of the present invention;
FIG. 4 is a flowchart showing creating process of managing object information in a central apparatus used in information managing system of the present invention;
FIG. 5 is a flowchart showing procedure of authentication process executed between a central apparatus and a terminal apparatus used in the information managing system of the present invention;
FIG. 6 is a flowchart showing procedure of transmission and reception process of managing object information executed between a central apparatus and a terminal apparatus used in the information managing system of the present invention;
FIG. 7 is a flowchart showing procedure of operation process of managing object information executed between a central apparatus and a terminal apparatus used in the information managing system of the present invention;
FIG. 8 is a flowchart showing procedure of information updating process executed between a central apparatus and a terminal apparatus used in the information managing system of the present invention; and
FIG. 9 is a flowchart showing procedure of abnormal processing executed between a central apparatus and a managing apparatus used in the information managing system of the present invention.

### DETAILED DESCRIPTION OF THE PREFERRED EMBODIMENTS

The present invention is described below while referring to drawings showing embodiments thereof.

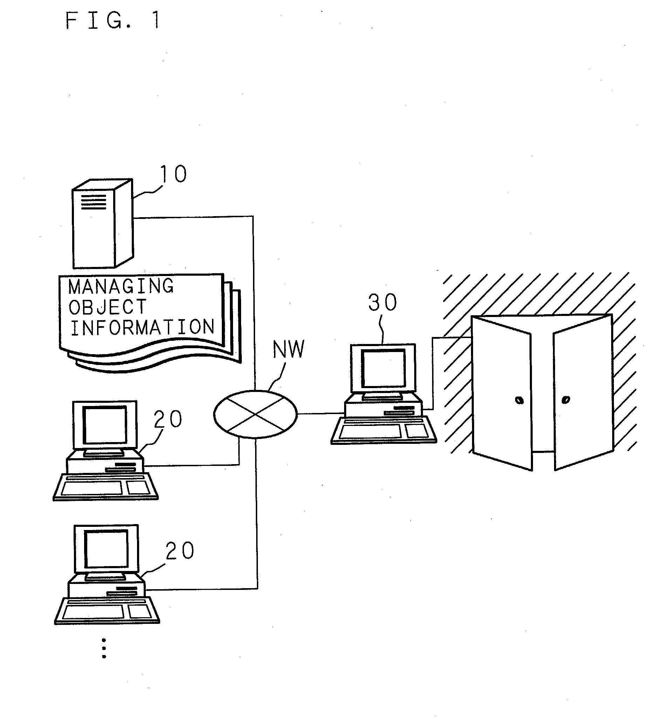

FIG. 1 is an explanatory diagram conceptually showing an information managing system of the present invention.

In FIG. 1, reference numeral 10 denotes a central apparatus of the present invention using a server computer, and it is connected to a communication network NW such as LAN (local area network).

To the communication network NW, terminal apparatuses 20, 20, ... using client computers, the central apparatus 10, and a managing apparatus 30 using a server computer are included. The managing apparatus 30 is an apparatus for managing the facilities in which the central apparatus 10, terminal apparatuses 20, 20,..., and others are installed.

The central apparatus 10 records various items of managing object information. The terminal apparatuses 20, 20, ... are connected to the central apparatus 10 through the communication network NW, and can access and utilize the information recorded in the central apparatus 10.

Facilities to be managed by the managing apparatus 30 are, for example, professional facilities for research, development, manufacture and other business works. The managing apparatus 30 controls various sensors and mechanisms used in crime and fire preventive applications in such professional facilities.

The configuration of each apparatus used in the information managing system of the present invention is described below.

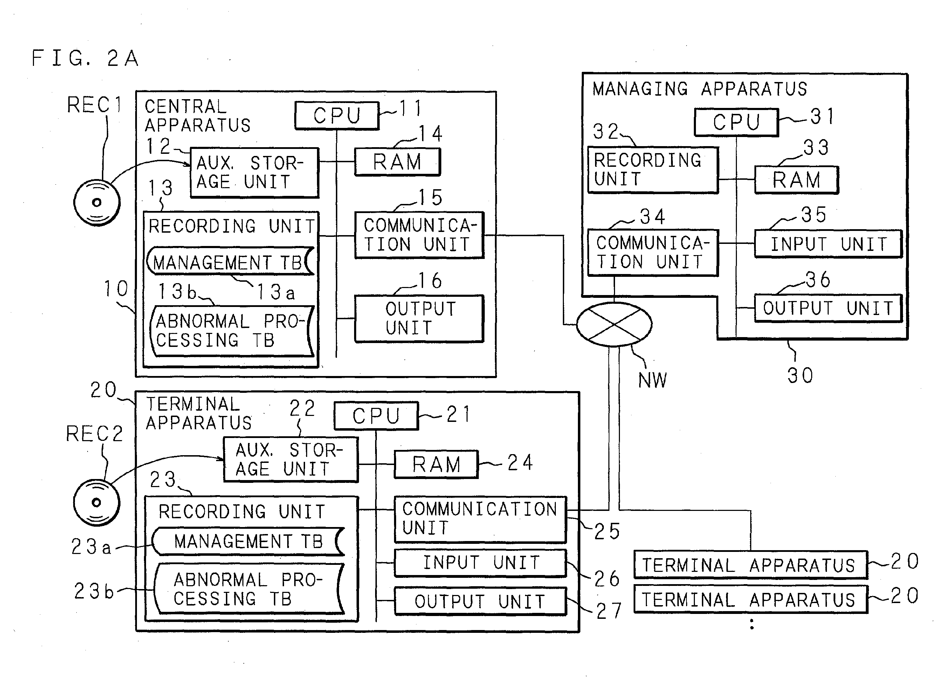

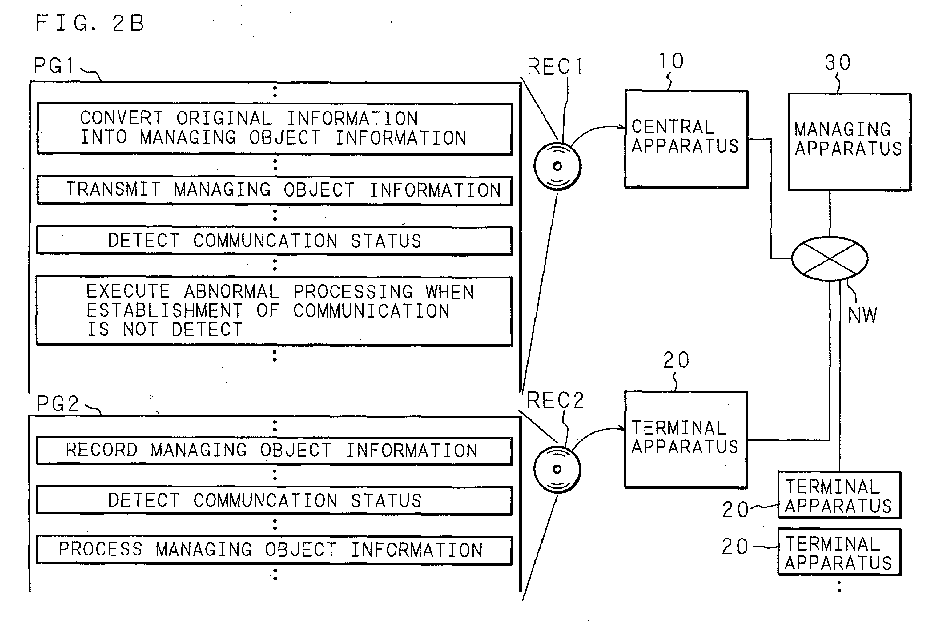

FIG. 2A is a block diagram showing a configuration of each apparatus used in the information managing system of the present invention and FIG. 2B is a schematic diagram showing contents of computer program of the present invention.

The central apparatus 10 comprises a CPU 11 for controlling the entire apparatus, an auxiliary storage unit 12 such as CD-ROM drive for reading various information from recording medium REC 1 such as CD-ROM in which various information such as computer program PG 1 and data for the central apparatus of the present invention are recorded, a recording unit 13 such as hard disk for recording various information such as computer program PG 1 and data read by the auxiliary storage unit 12, a RAM 14 for temporarily storing the information used in various processes, a communication unit 15 such as a LAN port connecting to the communication network NW, and an output unit 16 for generating a buzzer sound or the like as an alarm.

In addition, the central apparatus 10 can be realized by a general server computer by reading various information such as computer program PG 1 for the central apparatus of the present invention and data from the recording unit 13, recording them in the RAM 14, and executing the procedure contained in the computer program PG 1 by the CPU 11.

The recording unit 13 records various tables such as a management table (management TB) 13a showing setting of processing on the managing object information, and an abnormal processing table (abnormal processing TB) 13b for the central apparatus 10.

The terminal apparatus 20 includes, same as the central apparatus 10, a CPU 21, an auxiliary storage unit 22, a recording unit 23, a RAM 24, and a communication unit 25, and further an input unit 26 such as a mouse and a keyboard, and an output unit 27 such as a monitor and a printer.

In addition, the terminal apparatus 20 can be realized by a general client computer by reading various information such as computer program PG 2 for terminal apparatus of the present invention and various data from a recording medium REC 2 such as CD-ROM by means of the auxiliary storage unit 22, recording them in the recording unit 23, reading various information such as computer program PG 2 for terminal apparatus of the present invention and various data from the recording unit 23 and storing in the RAM 24, and executing the procedure included in the computer program PG 2 by the CPU 21.

The computer program PG 2 for terminal apparatus of the present invention is not only read from the recording medium REC 2, but also, for example, once recorded in the recording unit 13 of the central apparatus 10, and downloaded from the central apparatus 10 through the communication network NW, and recorded in the recording unit 23.

In the recording unit 23 of the terminal apparatus 10, not only the computer program PG 2 for terminal apparatus of the present invention, but also various software programs are recorded, such as software program for spreadsheet and software program for word processor.

The recording unit 23 further records various tables such as management table (management TB) 23a showing setting of processing on the managing object information, and an abnormal processing table (abnormal processing TB) 23b for the terminal apparatus 20.

The managing apparatus 30 includes same as the terminal apparatus 20, a CPU 31, a recording unit 32, a RAM 33, a communication unit 34, an input unit 35, and an output unit 36.

The tables recorded in the central apparatus 10 and terminal apparatus 20 are explained.

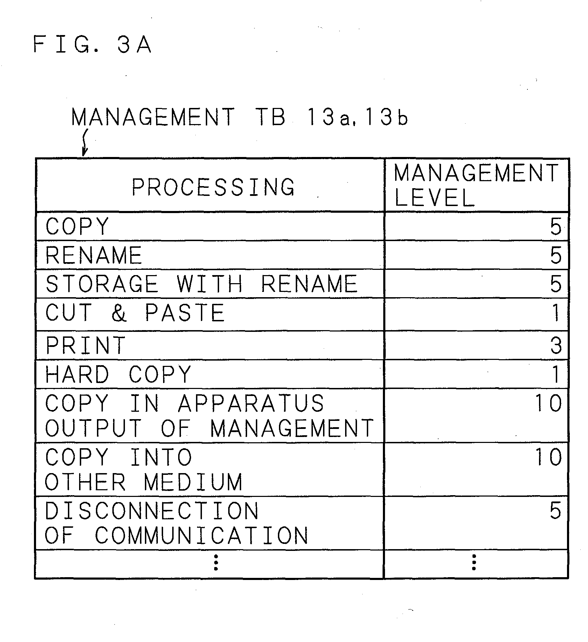

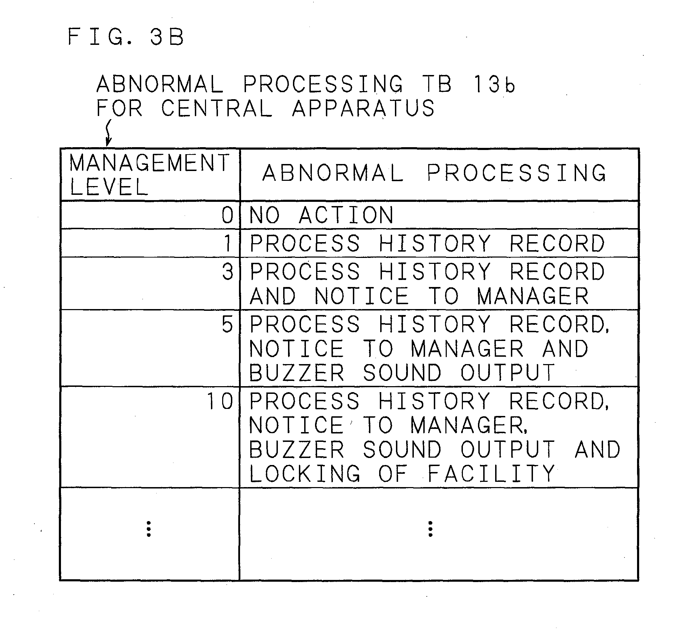

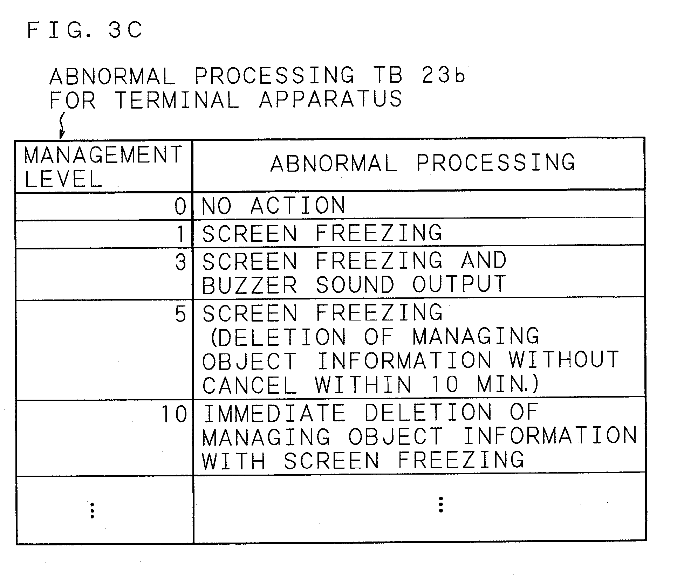

FIG. 3A, FIG. 3B, and FIG. 3C are explanatory diagrams conceptually showing tables showing setting of processing on managing object information in the information managing system of the present invention.

FIG. 3A is a conceptual diagram showing contents of management tables 13a, 23a recording various processes operated on the information to be controlled in correspondence to the management level set on each process. The management tables 13a, 23a are recorded in the recording unit 13 of the central apparatus 10 and the recording unit 23 of the terminal apparatus, respectively.

The management tables 13a, 23a are tables registering management level such as "5", "3" and "10" determined in correspondence to various processes such as "copy", "print" and "copy into other medium", and in the terminal apparatus 20 allowed to process up to management level of, for example, "5", "copy" of information (management level "5") and "print" process (management level "3") can be executed, but "copy into other medium" (management level "10") cannot be executed.

In this embodiment, the allowable management level is set to the terminal apparatus 20, but the allowable management level may be set to the individual pieces of managing object information.

FIG. 3B is a conceptual diagram showing contents of an abnormal processing table 13b for the central apparatus 10 recording the management level in correspondence with the relation to abnormal processing at the side of the central apparatus 10. The management table 13b is recorded in the recording unit 13 of the central apparatus 10.

The abnormal processing table 13b is a table for the central apparatus 10 registering the correspondence between the management level such as "1", "3" and "10" and the relation with the abnormal processing executed when processed each level in the terminal apparatus 10 not provided with permission of processing at each management level. For example, when the central apparatus 10 accepts an operation for processing of management level "10" not permitted in the terminal apparatus 20 which is provided with permission of processing up to management level "5", the central apparatus 10 executes abnormal processing such as "process history record", "notice to manager", "buzzer sound output", and "locking of facility door".

FIG. 3C is a conceptual diagram showing contents of an abnormal processing table 23b for the terminal apparatus 20 recording the management level in correspondence with the relation to abnormal processing at the side of the terminal apparatus 20, and it is recorded in the recording unit 23 of the terminal apparatus 20.

The abnormal processing table 23b is a table for the terminal apparatus 20 registering the correspondence between the management level such as "1", "3" and "10" and the relation with the abnormal processing executed when accepting operation for processing of higher management level although processing of such management level is not permitted. Such abnormal processing includes "screen freezing", "screen freezing and buzzer sound output", and "immediate deletion of managing object information with screen freezing". For example, when the terminal apparatus 20 permitted to process up to management level "5" accepts an operation for processing of management level "10" not permitted in the terminal apparatus 20, abnormal processing of "deletion of managing object information with screen freezing" is immediately executed.

Processing of various apparatuses used in the information managing system of the present invention is explained below.

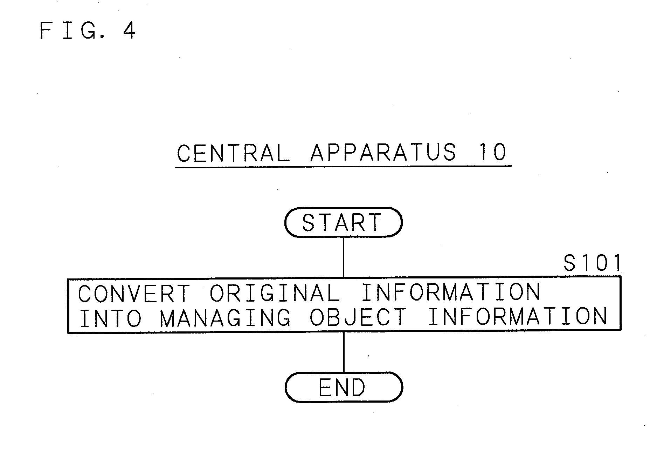

FIG. 4 is a flowchart showing creating process of managing object information in the central apparatus 10 used in the information managing system of the present invention.

The central apparatus 10 receives an instruction for making designated original information within the original information recorded in the recording unit 13 to become managing object to prevent from leakage, and executes managing object information creating process to convert the designated original information into managing object information to be managed.

Specifically, the central apparatus 10, by the control of the CPU 11 for executing the computer program PG 1 stored in the RAM 14, converts the designated original information into managing object information (S101).

The process of converting the original information into managing object information is a process in which data converting process for encrypting the process history (log) of the original information to be converted and for adding encrypted result as header and/or footer to the original information is executed, and further renaming process for renaming the name such as changing the extension of the original information is executed, and as a result, managing object information is created.

The managing object information thus created cannot be executed on the software program such as, for example, spreadsheet or word processor corresponding to the original information.

The managing object information thus created is the object of management in the central apparatus 10 and terminal apparatus 20, and the various process history such as copy, updating or the like of the managing object information is recorded in the central apparatus 10.

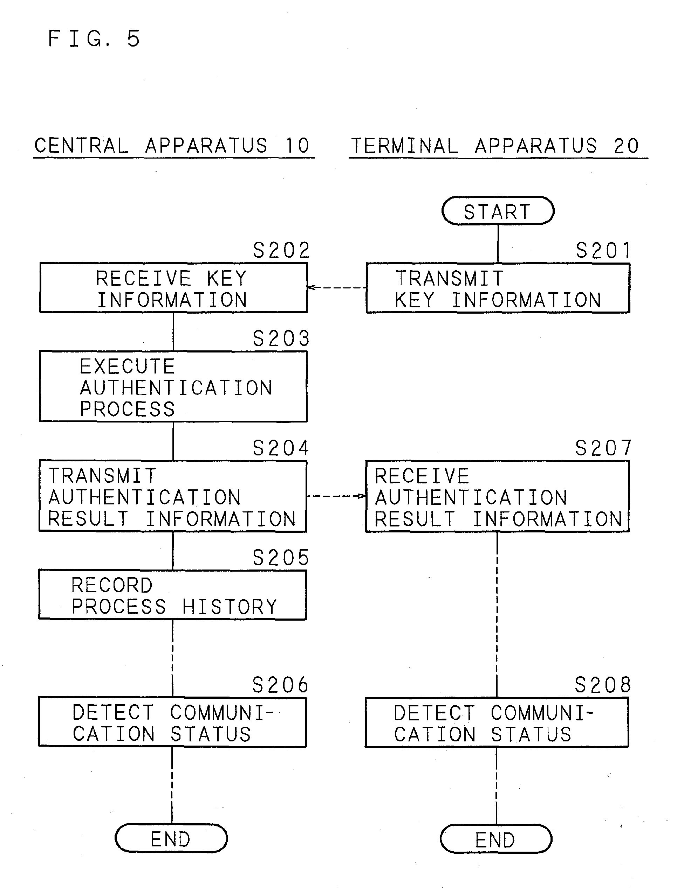

FIG. 5 is a flowchart showing procedure of authentication process executed between the central apparatus 10 and the terminal apparatus 20 used in the information managing system of the present invention.

When an operator who operates the terminal apparatus 20 desires to execute process such as copy or the like of the managing object information recorded in the central apparatus 10, the operator executes operation for connecting the terminal apparatus 20 to the communication network NW, and communicating with the central apparatus 10.

By the control of the CPU 21 for executing the computer program PG 2 stored in the RAM 24, the terminal apparatus 20 accepts the operation, and transmits a prerecorded key information to the central apparatus 10 from the communication unit 25 (S201).

By the control of the CPU 11 for executing the computer program PG 1 stored in the RAM 14, the central apparatus 10 receives the key information by the communication unit 15 (S202), and executes authentication process for the received key information based on to the prerecorded keyhole information (S203), then transmits the authentication result information showing the result of authentication process to the terminal apparatus 20 from the communication unit 15 (S204).

The key information prerecorded in the terminal apparatus 20 is the information for authentication being read out from the recording medium REC 2, or transmitted from the central apparatus 10 through the communication network NW, and recorded in the recording unit 23, and it corresponds to the keyhole information.

Specific examples of corresponding key information and keyhole information are shown below.
Key information: 192-222-2392000
Keyhole information: 918Z888Z8718AAA

The key information and keyhole information are respectively 15-digit code trains, and the sum of corresponding places of code train is 10 each.

Meanwhile, "-" corresponds to Z, and "0" corresponds to A.

By the control of the CPU 11 for executing the computer program PG 1 stored in the RAM 14, when it is judges that the authentication is successful, the central apparatus 10 records the process history of successful authentication in the recording unit 13 (S205), and executes process for detecting the communication status with the terminal apparatus 20 at predetermined intervals, for example, 30 seconds (S206).

Processing to detect communication state in the central apparatus 10 is hereinafter executed at predetermined intervals until the communication with the terminal apparatus 20 is disconnected, and when it is not detected that communication is established during the predetermined disconnection judging standard, for example, 60 seconds, it is judged that the communication is disconnected.

By the control of the CPU 21 for executing the computer program PG 2 stored in the RAM 24, the terminal apparatus 20 receives the authentication result information by the communication unit 25 (S207), and when it is judged that the authentication is successful from the received authentication result information, executes process for detecting the communication status with the central apparatus 10 at predetermined intervals, for example, 30 seconds (S208).

Processing to detect communication state in the terminal apparatus 20 is also hereinafter executed at predetermined intervals until the communication with the central apparatus 20 is disconnected.

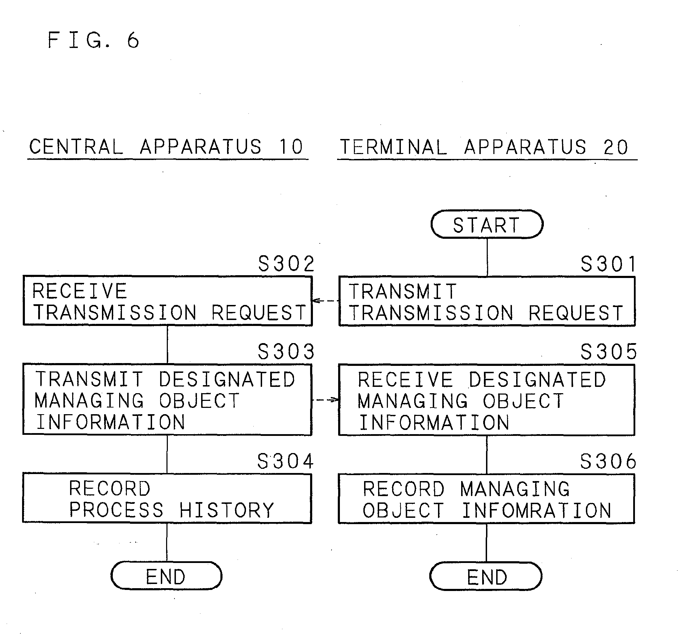

FIG. 6 is a flowchart showing procedure managing object information transmission and reception process executed between the central apparatus 10 and the terminal apparatus 20 used in the information managing system of the present invention.

After completion of authentication process shown in the flowchart in FIG. 5, as far as establishment of mutual communication between the central apparatus 10 and the terminal apparatus 20 is being detected, the managing object information recorded in the central apparatus 10 can be transmitted to the terminal apparatus 20.

The terminal apparatus 20, by the control of the CPU 21 for executing the computer program PG 2 stored in the RAM 24, accepts designation of managing object information requiring transmission, and transmits the transmission request requiring transmission of the accepted managing object information to the central apparatus 10 from the communication unit 15 (S301).

The central apparatus 10, by the control of the CPU 11 for executing the computer program PG 1 stored in the RAM 14, receives the transmission request by the communication unit 15 (S302), transmits the designated managing object information to the terminal apparatus 20 from the communication unit 15 according to the received transmission request among the managing object information recorded in the recording unit 13 (S303), and records the transmission of the managing object information as history (S304).

The terminal apparatus 20, by the control of the CPU 21 for executing the computer program PG 2 stored by the RAM 24, receives the managing object information in the communication unit 25 (S305), and records the received managing object information in the recording unit 23 (S306).

Hereinafter, the central apparatus 10 monitors various processes executed on the managing object information by the terminal apparatus 20, such as copy, rename, update, print, and the like.

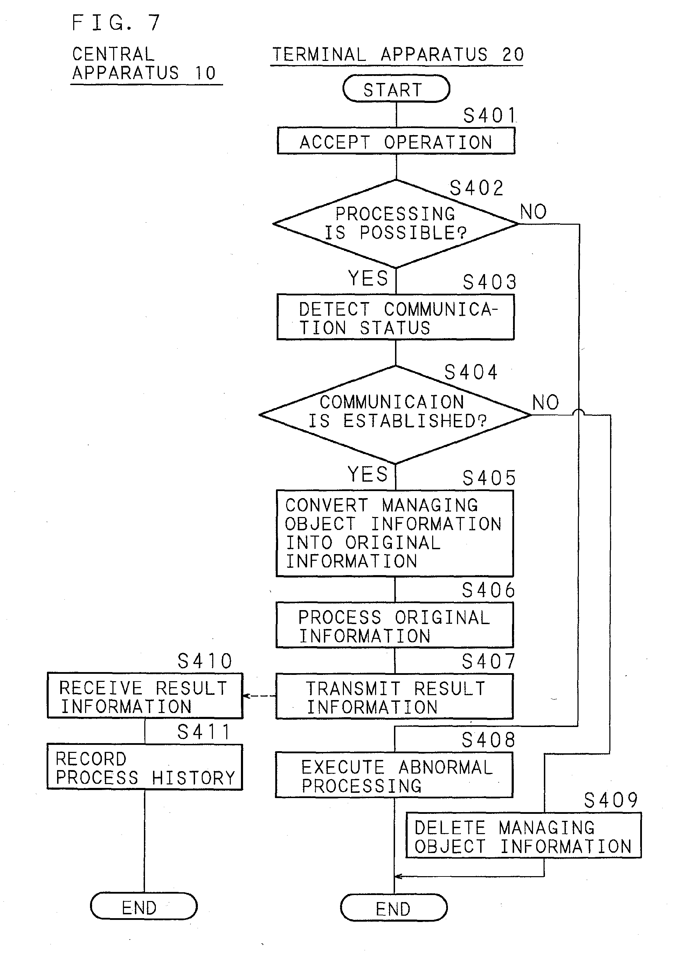

FIG. 7 is a flowchart showing procedure of operation process of managing object information executed between the central apparatus 10 and the terminal apparatus 20 used in the information managing system of the present invention.

An operator operates the terminal apparatus 20 for processing the managing object information, such as copy, rename, update, print, and the like.

The terminal apparatus 20, by the control of the CPU 21 for executing the computer program PG 2 stored in the RAM 24, accepts such operation on the managing object information recorded in the recording unit 23 from the input unit 26 (S401), and judges permission or rejection of processing on the managing object information according to the accepted operation on the basis of the prerecorded setting, that is, the recorded content of the management table 23a (S402).

The terminal apparatus 20, by the control of the CPU 21 for executing the computer program PG 2 stored in the RAM 24, when it is judged that the processing is possible at step S402 (S402: Yes), detects the communication status with the central apparatus 10 (S403). As a result, only when it is detected that the communication with the central apparatus 10 is established (S404: Yes), the terminal apparatus 20 converts the managing object information into original information (S405), and processes the converted original information according to the accepted operation (S406), and transmits the result information showing the processing result to the central apparatus 10 from the communication unit 25 (S407).

At step S402, when it is judged that processing is impossible (S402: No), by the control of the CPU 21 for executing the computer program PG 2 stored in the RAM 24, the terminal apparatus 20 executes abnormal processing (S408) according to the setting prerecorded in the recording unit 23, that is, the recorded contents in the abnormal processing table 23b for the terminal apparatus 20.

At step S403, when establishment of communication with the central apparatus 10 is not detected (S404: No), by the control of the CPU 21 for executing the computer program PG 2 stored in the RAM 24, the terminal apparatus 20 deletes the managing object information recorded in the recording unit 23 (S409).

Meanwhile, the terminal apparatus 20 is always detecting the communication status with the central apparatus 10 at predetermined intervals, for example, 30 seconds, and when establishment of communication is not detected within a predetermined disconnection judging standard of 60 seconds, for example, judges that the communication is disconnected, and deletes the managing object information whether the operation is accepted or not.

The central apparatus 10, by the control of the CPU 11 for executing the computer program PG 1 stored in the RAM 14, receives the result information by the communication unit 25 (S410), and records the received result information as process history in the recording unit 13 (S411).

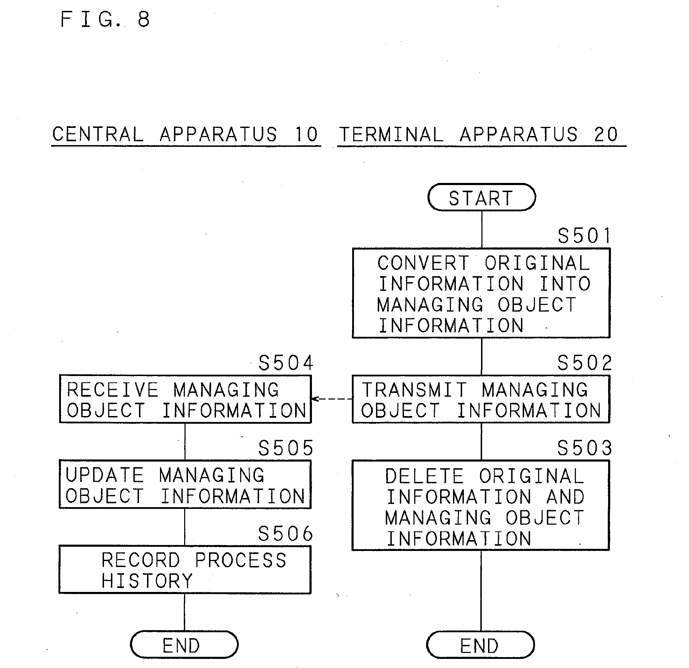

FIG. 8 is a flowchart showing procedure of updating process of information executed between the central apparatus 10 and the terminal apparatus 20 used in the information managing system of the present invention.

When the process at step S405 in the managing object information operation process explained in the flowchart of FIG. 7 is updating of the original information converted from the managing object information, the terminal apparatus 20, by the control of the CPU 21 for executing the computer program PG 2 stored in the RAM 24, converts the updated original information into managing object information (S501), and transmits the converted managing object information to the central apparatus 10 from the communication unit 25 (S502), and then deletes the converted managing object information and its original information (S503).

The central apparatus 10, by the control of the CPU 11 for executing the computer program PG 1 stored in the RAM 14, receives the managing object information by the communication unit 15 (S504), updates managing object information corresponding to the received managing object information among the managing object information recorded in the recording unit 13 (S505), then records the result information showing the result of the processing as the history in the recording unit 13 (S506).

Processing for converting the updated original information into managing object information may be done also in the central apparatus 10, not limited to the terminal apparatus 20.

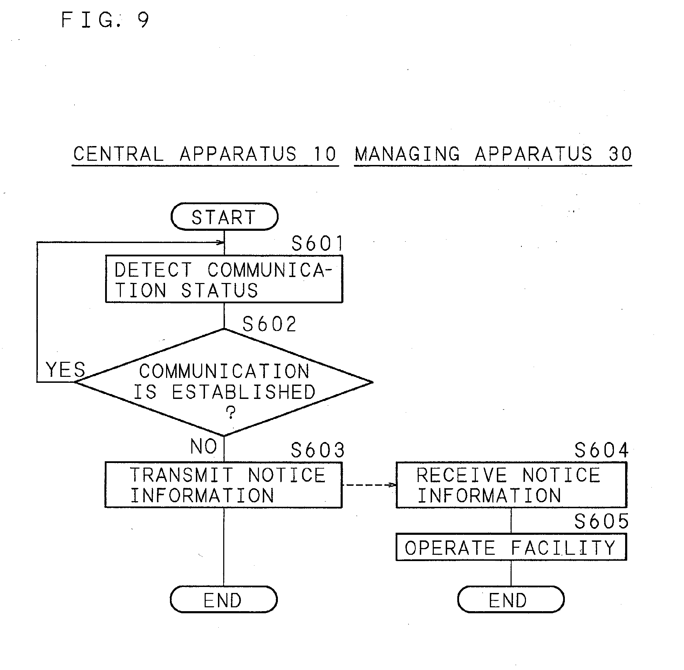

FIG. 9 is a flowchart showing procedure of abnormal processing executed between the central apparatus 10 and the managing apparatus 30 used in the information managing system of the present invention.

The central apparatus 10 receives the contents of the operation accepted by the terminal apparatus 20, and when it is judged that the accepted operation content is not permitted operation, executes predetermined abnormal processing by referring to the abnormal processing table 13b for the central apparatus 10.

The central apparatus 10 executes abnormal processing when abnormality is detected not only in the operation accepted by the terminal apparatus 20 but also in the communication status with the terminal apparatus 20.

Hereinafter, abnormal processing on the basis of communication status is explained.

The central apparatus 10, by the control of the CPU 11 for executing the computer program PG 1 stored in the RAM 14, is detecting the communication status with the terminal apparatus 20 as the destination of transmission of managing object information at predetermined intervals (S601). When establishment of communication with the terminal apparatus 20 is not detected (S602: No), the central apparatus 10 transmits notice information as abnormal notice to the managing apparatus 30 from the communication unit 15, in order to lock the facility key, as abnormal processing on the basis of the set prerecorded in the recording unit 13, that is, the recorded content of the abnormal processing table 13b for the central apparatus 10 (S603).

Abnormal processing is not limited to transmission of notice information, but may include history record, notice to the responsible manager, or output of buzzer sound.

At step S602, when establishment of communication with the terminal apparatus 20 is detected (S602: Yes), process goes back to step S601, and the same process is repeated.

The managing apparatus 30, by the control of the CPU 31, receives the notice information by the communication unit 34 (S604), and executes predetermined operation on the facility according to the received notice information, that is, the door is locked in this case (S605).

Thus, by closing or locking the facility entrance and exit doors, if a third person illegally acquires the managing object information, escape of the third person can be prevented.

In the above mentioned embodiment, depending on the detected communication status, the managing object information is deleted, other processing is done, or the facility doors are closed, but they are only examples, and the present invention may be applied in various embodiments in which abnormal processing is executed when establishment of communication is not detected, or when a specific operation is permitted when establishment of communication is detected.

As described herein, according to the information management method, information managing system, central apparatus, terminal apparatus, and computer program product of the present invention, the terminal apparatus which receives managing object information to be managed from the central apparatus detects the communication status with the central apparatus, and judges whether or not to execute processing on the received managing object information on the basis of the detected communication status. As a result, in the terminal apparatus, only when the communication with the central apparatus is established, processing on the managing object information is permitted within a predetermined range, or when communication with the central apparatus is disconnected, the managing object information is automatically deleted, and therefore after the managing object information is transmitted to the terminal apparatus, the managing object information can be managed by the central apparatus. Therefore, according to the information management method, information managing system, central apparatus, terminal apparatus, and computer program product of the present invention, management of information is reinforced, and leak to outside can be prevented, among other outstanding effects.

## Claims

1. An information management method for processing managing object information to be managed by using a central apparatus recording managing object information and a terminal apparatus communicating with said central apparatus, **characterized by** comprising steps of:
transmitting the managing object information recorded in said central apparatus (10) from said central apparatus (10) to said terminal apparatus (20);
detecting communication status with said central apparatus (10) by said terminal apparatus (20); and
judging by said terminal apparatus (20), on the basis of the detected communication status, whether or not to execute processing on the managing object information received by said terminal apparatus (20).

2. An information managing system including: a central apparatus recording managing object information to be managed; and a terminal apparatus communicating with said central apparatus, **characterized in that**
said central apparatus (10) comprises means (15) for transmitting the recorded managing object information to said terminal apparatus (20); and
said terminal apparatus (20) comprises: means (21) for detecting communication status with said central apparatus (10); and means (21) for judging whether or not to execute processing on the received managing object information on the basis of the detected communication status.

3. An information managing system including: a central apparatus recording managing object information to be managed; and a terminal apparatus communicating with said central apparatus, **characterized in that**
said central apparatus (10) comprises: recording means (13) for recording the managing object information; and means (15) for transmitting the recorded managing object information recorded in said recording means (13) to said terminal apparatus (20); and
said terminal apparatus (20) comprises: recording means (23) for recording the received managing object information; means (26) for accepting the operation for the managing object information having been recorded in said recording means (23); means (21) for detecting communication status with said central apparatus (10); and means (21) for processing the managing object information on the basis of the accepted operation only when establishment of communication with said central apparatus (10) is detected.

4. The information managing system as set forth in Claim 3, **characterized in that**
said terminal apparatus (20) further comprises means (25) for transmitting result information showing processing result of managing object information to said central apparatus (10); and
said central apparatus (10) records the received result information in said recording means (13).

5. The information managing system as set forth in Claim 3 or 4, **characterized in that**
said terminal apparatus (20) further comprises: means (25) for transmitting updated managing object information to said central apparatus (10) when the processing on the managing object information is a process for updating it; and means (21) for deleting the managing object information; and
said central apparatus (10) further comprises means (21) for updating managing object information corresponding to the received updated managing object information among the managing object information recorded in said recording means (13).

6. The information managing system as set forth in any one of Claims 3 through 5, **characterized in that**
said terminal apparatus (20) further comprises means (21) for judging whether or not to execute processing on the managing object information on the basis of prerecorded setting or setting transmitted from said central apparatus (10).

7. An information managing system comprising a central apparatus recording managing object information to be managed and a terminal apparatus communicating with said central apparatus, **characterized in that**
said central apparatus (10) comprises means (15) for transmitting the recorded managing object information to said terminal apparatus (20); and
said terminal apparatus (20) comprises: recording means (23) for recording the received managing object information; means (21) for detecting the communication status with said central apparatus (10); and means (21) for deleting the recorded managing object information having been recorded in said recording means (23) when establishment of communication with said central apparatus (10) is not detected.

8. The information managing system as set forth in any one of Claims 2 through 7, **characterized in that**
said central apparatus (10) further comprises: means (11) for detecting the communication status with said terminal apparatus (20); and means (11) for executing predetermined abnormal processing when establishment of communication with said terminal apparatus (20) is not detected.

9. The information managing system as set forth in Claim 8, **characterized by** further comprising:
a managing apparatus (30) for communicating with said central apparatus (10) and managing a facility in which said central apparatus (10) and/or said terminal apparatus (20) is installed;
wherein said means (11) of said central apparatus (10) for executing predetermined abnormal processing transmits notice information for informing abnormal to said managing apparatus (30); and
said managing means (30) comprises means (36) for making said facility to execute predetermined operation in said facility when receiving the notice information.

10. The information managing system as set forth in any one of Claims 2 through 9, **characterized in that**
said central apparatus (10) further comprises means (11) for converting original information as the origin of the managing object information into the managing object information; and
said terminal apparatus (20) further comprises means (21) for converting the managing object information into original information.

11. An information managing system including: a central apparatus having communicating means and recording means for recording managing object information to be managed; and a terminal apparatus having communicating means for communicating with said central apparatus, **characterized in that**
said central apparatus (10) comprises a processor capable of performing operation of transmitting the managing object information recorded in said recording means (13) to said terminal apparatus (20) by said communicating means (15); and
said terminal apparatus (20) comprises a processor capable of performing operations of detecting communication status by said communicating means (25) with said central apparatus (10); and judging whether or not to execute processing on the managing object information received by said communicating means (25) on the basis of the detected communication status.

12. An information managing system including: a central apparatus having communicating means and recording means for recording managing object information to be managed; and a terminal apparatus having recording means for recording the managing object information, inputting means, and communicating means for communicating with said central apparatus, **characterized in that**
said central apparatus (10) comprises a processor capable of performing operation of transmitting the managing object information recorded in said recording means (13) to said terminal apparatus (20) by said communicating means (15); and
said terminal apparatus (20) comprise a processor capable of performing operations of recording the managing object information received by said communicating means (25) in said recording means (23); causing said inputting means (26) to accept the operation for the managing object information recorded in said recording means (23); detecting communication status by said communicating means (25) with said central apparatus (10); and processing the managing object information recorded in said recording means (23) on the basis of the operation accepted by said inputting means (26) only when establishment of communication with said central apparatus (10) is detected.

13. The information managing system as set forth in Claim 12, **characterized in that**
said processor of said terminal apparatus (20) further capable of performing operation of causing said communicating means (25) to transmit result information showing result of processing of managing object information to said central apparatus (10); and
said processor of said central apparatus (10) further capable of performing operation of recording the result information received by said communicating means (15) in said recording means (13) .

14. The information managing system as set forth in Claim 12 or 13, **characterized in that**
said processor of said terminal apparatus (20) further capable of performing operations of causing communicating means (25) to transmit updated managing object information to said central apparatus (10) when the processing accepted by said inputting means (26) on the managing object information is a process for updating it; and deleting the processed managing object information from said recording means (23); and
said processor of said central apparatus (10) further capable of performing operation of updating managing object information corresponding to the updated managing object information received by said communicating means (15) among the managing object information recorded in said storing means (13).

15. The information managing system as set forth in any one of Claims 12 through 14, **characterized in that**
said processor of said terminal apparatus (20) further capable of performing operation of judging whether or not to execute processing on the managing object information on the basis of the prerecorded setting or the setting transmitted from said central apparatus (10).

16. An information managing system including: a central apparatus having communicating means and recording means for recording managing object information to be managed; and a terminal apparatus having recording means for recording the managing object information, and communicating means for communicating with said central apparatus, **characterized in that**
said central apparatus (10) comprises a processor capable of performing operation of transmitting the managing object information recorded in said recording means (13) to said terminal apparatus (20) by said communicating means (15); and
said terminal apparatus (20) comprises a processor capable of performing operations of recording the managing object information received by said communicating means (25); detecting communication status by said communicating means (25) with said central apparatus (10); and deleting the managing object information recorded in said recording means (23) when establishment of communication with said central apparatus (10) is not detected.

17. The information managing system as set forth in any one of Claims 11 through 16, **characterized in that**
said processor of said central apparatus (10) further capable of performing operations of detecting communication status by said communicating means (15) with said terminal apparatus (20); and executing predetermined abnormal processing when establishment of communication with said terminal apparatus (20) is not detected.

18. The information managing system as set forth in Claim 17, **characterized by** further including:
a managing apparatus (30) for communicating with said central apparatus (10), managing said facility in which said central apparatus (10) and/or said terminal apparatus (20) is installed, and having outputting means (36) for causing said facility to execute operation;
wherein said processor of said central apparatus (10) further capable of performing operation of transmitting by said communicating means (15) notice information for informing abnormal to said managing apparatus (30); and
said managing means (30) comprises a processor capable of performing operation of causing said facility to execute predetermined operation through said outputting means (36) when receiving the notice information.

19. The information managing system as set forth in any one of Claims 11 through 18, **characterized in that**
said processor of said central apparatus (10) further capable of performing operation of converting the original information as the origin of the managing object information into the managing object information; and
said processor of said terminal apparatus (20) further capable of performing operation of converting the managing object information into original information.

20. A central apparatus having means for communicating with a terminal apparatus, for recording managing object information to be managed, **characterized by** comprising:
means (11) for converting the original information as the origin of managing object information into the managing object information;
means (15) for transmitting the managing object information to said terminal apparatus (20);
means (11) for detecting the communication status with said terminal apparatus (20); and
means (11) for executing predetermined abnormal processing when establishment of communication with said terminal apparatus (20) is not detected.

21. A central apparatus having communicating means for communicating with a terminal apparatus and recording means for recording managing object information to be managed, **characterized by** comprising a processor capable of performing operations of:
converting the original information as the origin of managing object information into the managing object information;
transmitting the managing object information recorded in said recording means (13) to said terminal apparatus (20);
detecting communication status by said communicating means (15) with said terminal apparatus (20); and
executing predetermined abnormal processing when establishment of communication with said terminal apparatus (20) is not detected.

22. A terminal apparatus having means for communicating with a central apparatus which records managing object information to be managed, **characterized by** comprising
means (21) for receiving the managing object information from said central apparatus (10);
recording means (23) for recording the received managing object information;
means (21) for detecting the communication status with said central apparatus (10); and
means (21) for judging whether or not to execute processing on the recorded managing object information having been recorded in said recording means (23) on the basis of the detected communication status.

23. A terminal apparatus having communicating means for communicating with a central apparatus and recording means for recording managing object information to be managed, **characterized by** comprising a processor capable of performing operations of:
receiving the managing object information by said communicating means (15) from said central apparatus (10);
recording the managing object information received by said communicating means (25) by said recording means (23);
detecting communication status by said communicating means (25) with said central apparatus (10); and
judging whether or not to execute processing on the managing object information recorded in said recording means (23) on the basis of the detected communication status.

24. A computer program product for use with an information managing system, comprising:
a computer usable storage medium having a computer readable program code embodied therein for causing a computer communicating with other apparatus to process managing object information to be managed, said computer readable code comprising steps of:
causing a computer to convert the original information as origin of managing object information into managing object information;
causing a computer to transmit the managing object information to other apparatus;
causing a computer to detect communication status with the apparatus of the communication destination of the managing object information; and
causing a computer to execute a predetermined abnormal processing when establishment of communication with the apparatus of the communication destination of the managing object information is not detected.

25. A computer program product for use with an information managing system, comprising:
a computer usable storage medium having a computer readable program code embodied therein for causing a computer communicating with other apparatus to process managing object information to be managed, said computer readable code comprising steps of:
causing a computer to record the received managing object information when receiving it from other apparatus;
causing a computer to detect communication status with the apparatus of the communication source of the managing object information; and
causing a computer to judge whether or not to execute processing on the recorded managing object information on the basis of the detected communication status.
